# EUROPEAN PATENT APPLICATION

(11) **EP 2 733 604 A1**
(43) Date of publication of application: **21.05.2014**
(21) Application number: 12811384.2
(22) Date of filing: 14.06.2012
(51) Int. Cl.: G06F 9/44

(54) **SERVICE MODEL-ORIENTED SOFTWARE RUNNING PLATFORM AND RUNNING METHOD THEREOF**

(30) Priority: 12.07.2011 CN 201110193036
(71) Applicant: Tongling Yucheng Software Technology Co., Ltd., Tongling, Anhui 244000 (CN)
(72) Inventor: ZHONG, Wenxiang, Tongling Anhui 244000 (CN)
(74) Representative: Gulde & Partner
(86) International application number: PCT/CN2012/076894
(87) International publication number: WO 2013/007141

(57) **Abstract**

A service model-oriented software operation platform and an operation method thereof are provided in the present invention, so as to develop a safe, stable and reliable service model-oriented software system, which is easily extensible and learnable with a high development efficiency and a low maintenance cost. The software operation platform disclosed by the present invention includes a server-side system architecture and a client-side system architecture; the server-side system architecture includes a service model factory component, a service model control engine and an activity service model component; the client-side system architecture includes a client-side control engine, a data object agent component and a user interface component. The software operation platform and the operation method thereof disclosed by the present invention lay a solid foundation for the development of the service-oriented software technology, provide solutions for the development of the computer software system in the cloud environment, and opens new ideas and methods for the development and application of the networked software, thus they have a wide application range.

## Description

### Field of the Invention

The present invention relates to the field of computer technology, and particularly, to a service model-oriented software operation platform in a computer software system.

### Background of the Invention

The software development technology undergoes the stages of process orientation and object orientation, and currently progresses towards the directions of component orientation and service orientation. In order to promote the software development rate and shorten the software development cycle, various solutions and software products are brought out in the present market, and many software vendors abroad also launch some applications. But in the existing technologies and solutions, those applications are mainly made around the original technology and platform, and their operation methods and design ideas have no substantive change. It is difficult to fit the complex and diversified service requirements and changes. Particularly, most applications based on the Internet environment are form-based at present, so the interactivity is very poor, the control is complex, and the amount of codes is large, which lead to an expensive development and maintenance cost. Currently, most cloud development solutions and products just simply imitate the conventional development means in the Internet environment, or they are limited to modifications and customizations of certain product. It is difficult to meet the user's final requirement, and many negative influences are brought to the development of the computer software technology.

### Summary of the Invention

The main object of the present invention is to provide a service model-oriented software operation platform and an operation method thereof, which are safe, stable, reliable, easily extensible, with a high development efficiency and low maintenance cost.

In order to achieve the above object, the present invention discloses a software operation platform, comprising a server-side system architecture and a client-side system architecture;
the server-side system architecture comprises:
a service model factory component configured to search resources of a defined service model, and create and manage a service model object according to searched resource data, the service model comprising a data object accessible through a denomination, a user interface descriptive component, a service model activity and client-side resources;
a service model control engine configured to provide services of session security authentication and service model access authentication, and load or release an activity service model component;
an activity service model component configured to process an access request from a client-side, and provide a program context interface and an external access interface; upon the client-side request, synchronize and accept data transferred from the client-side, inquire and create various requested resources, respond to and execute the requested service model activity, and according to the execution condition of the service model activity, return the requested resources, data or abnormal information; load a service model instance according to the service model object defined by the service model factory component, parse the relation between the service model definition, the service model inheritance and the component link, schedule various resources defined in the service model, create and manage an activity data object instance and interaction data according to the data object component in the service model object, and perform the service model activity defined in the service model to complete a client-side scheduling or other external scheduling;
the client-side system architecture comprises:
   a client-side control engine configured to process a resource request from the client-side, instruct a scheduling, transmit data or other resources to be synchronized with the server, request to perform a service model activity, data encoding and decoding, and communications, respond to, parse, load and execute data, codes or other resources returned from the server-side, and provide a code operation environment for a client-side program;
   a data object agent component configured to serve as a source of data displayed by the user interface component, which corresponds to an activity data object instance having the same denomination in the activity service model component and contains all or partial data of the activity data object instance;
   a user interface component, comprising any interface component to be displayed at the client-side, which corresponds to the user interface descriptive component defined in the service model through a denomination, and synchronizes with data of the data object agent component through an event drive response mechanism.

In correspondence to the above software operation platform, the present invention discloses an operation method, comprising:
Step S1: the software operation platform starts to complete an initialization operation
Step S2: a client-side sends a page request to a working page, and requested page parameters comprise a service model name defined in the software operation platform;
Step S3: the working page loads page resources, starts a client-side control engine of a client-side system architecture, and transfers the service model name in the page parameters to the client-side control engine, so that the client-side control engine requests a server-side to load an activity service model component having the same name as the service model name, to initialize user interface component resources;
Step S4: in response to the client-side request, a service model control engine at the server-side searches whether any activity service model component having the same name exists in the cache according to the requested service model name, and if yes, turning to step S8, otherwise going to step S5;
Step S5: the service model control engine at the server-side searches a service model factory component at the server-side for a service model object having the same name as the service model name requested by the client-side, and performs an inspection and authentication according to the searched service model object;
Step S6: the service model control engine at the server-side creates an activity service model component according to the authenticated service model object and caches the same;
Step S7: the activity service model component at the server-side performs an initialization operation;
Step S8: upon the client-side request, the activity service model component at the server-side searches the requested resources, performs the service model activity defined in the requested service model, synchronizes and accepts data submitted by the client-side, encodes the formats of various resources, data and abnormal information to be returned to the client-side, and returns them to the client-side;
Step S9: the client-side control engine parses format data returned from the server-side, dynamically creates a user interface component, a data object agent component and data to be loaded in the client-side system architecture, caches or executes returned scripts and other resources, and displays the created user interface component; and
Step S10: a client-side user of the client-side system architecture performs relevant operations, wherein the client-side control engine performs predefined scripts, and synchronizes added or modified data to the server-side, and/or requests the server-side to perform corresponding service model activity.

The service model-oriented software operation platform and the operation method thereof disclosed by the present invention at least have the following advantages:
1. Member integration and customization are supported. The platform and method are integrated solutions of platform architecture, user interface, data persistence, security, rights management, etc. Release or deployment is not required, and the code amount is greatly reduced as compared with the traditional situation. Thus they are simple, clear, safe, stable, reliable, and easily learnable and extensible, with a high development efficiency, a low maintenance cost, and a wide application range.
2. The software development only needs to create or define various service models of the software operation platform, which simplifies the software system development, and program release or deployment is not required. Further, the workload of code writing is largely reduced, which decreases the cost of development, implementation and maintenance, obviously shortens the software development cycle, and effectively reduces the number of network interactions and the transferred data traffic. In addition, the system security, stability, reliability and user interface interactivity are enhanced, and the application range is wide. Thus the platform and the method lay a solid foundation for the development of the service-oriented software technology, provide solutions for the development of the computer software system in the cloud environment, and opens new ideas and methods for the development and application of the networked software.

### Brief Description of the Drawings

Fig. 1 is a schematic diagram of the overall architecture of a service model-oriented software operation platform disclosed by an embodiment of the present invention;
Fig. 2 is a schematic diagram of the structure and the content of a service model disclosed by an embodiment of the present invention;
Fig. 3 is a schematic diagram of a denomination inheritance structure of a service module disclosed by an embodiment of the present invention;
Fig. 4 is a schematic diagram of the structure of a user interface descriptive component of an inter-model link defined by a service module disclosed by an embodiment of the present invention;
Fig. 5 is a flow diagram of an operation method of a service model-oriented software operation platform in a computer software system disclosed by an embodiment of the present invention;
Figs. 6 and 7 are flow diagrams of development methods of service model-oriented software in a computer software system disclosed by an embodiment of the present invention.

The present invention is further described as follows with reference to the drawings.

### Detailed Description of the Preferred Embodiments

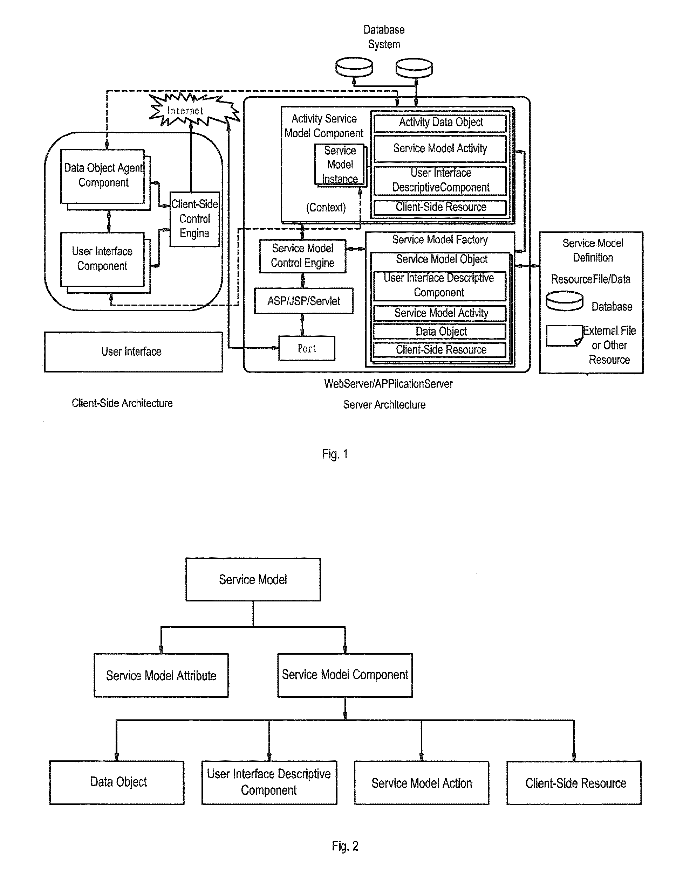

The embodiment discloses a software operation platform as illustrated in Fig. 1, including a server-side system architecture and a client-side system architecture, wherein the server-side system architecture includes a service model factory component, a service model control engine and an activity service model component; the client-side system architecture includes a client-side control engine, a data object agent component and a user interface component. In which, 'Port' is an access port opened by the server upon a request from the client-side, 'ASP' is the abbreviation of the Active Server Page, which is an application of Microsoft.net architecture, while 'JSP' and 'Servlet (Java Server Pages)' are dominated by the Sun Microsystems to propose an active webpage technical standard and an access technology, and they belong to the J2EE specification.

The functions of the constituent parts are described as follows.

The service model factory component is configured to search resources of a defined service model, and create and manage a service model object according to searched resource data; the service model is a classification of the object to be described by the software system in the angle of software engineering, specifically including: a data object accessible through a denomination, a user interface descriptive component, a service model activity and client-side resources.

The service model control engine is configured to provide services of session security authentication and service model access authentication, and load or release an activity service model component.

The activity service model component is configured to process an access request from a client-side, and provide a program context interface and an external access interface; upon the client-side request, synchronize and accept data transferred from the client-side, inquire and create various requested resources, respond to and execute the requested service model activity, and according to the execution condition of the service model activity, return the requested resources, data or abnormal information (to be noted, in the present invention, data and resources are not strictly distinguished from each other; generally speaking, the range of resources is wider, for example, script, user interface, external file, etc. can all be called as resources, but those resources exist in the software system as data of various forms); load a service model instance according to the service model object defined by the service model factory component, parse the relation between the service model definition, the service model inheritance and the component link, schedule various resources defined in the service model, create and manage an activity data object instance and interaction data according to the data object component in the service model object, and perform the service model activity defined in the service model to complete a client-side scheduling or other external scheduling. Furthermore, the activity data object makes an interaction of cached activity data with the database or other external resources, to realize data processing and data persistence.

The client-side control engine is configured to process a resource request from the client-side, instruct a scheduling, transmit data or other resources to be synchronized with the server, request to perform a service model activity, data encoding and decoding, and communications, respond to, parse, load and execute data, codes or other resources returned from the server-side, and provide a code operation environment for a client-side program.

The data object agent component is configured to serve as a source of data displayed by the user interface component, which corresponds to an activity data object instance having the same denomination in the activity service model component and includes all or partial data of the activity data object instance, so as to realize a persistence of the client-side data. In this embodiment, preferably, the row data of the data object agent component corresponds to the row data of the activity data object in the activity service model component at the server-side through a unique row identifier which is dynamically generated, and serves as the identifying basis for data synchronization. In which, there are two modes for the row data content synchronization between the activity data objects in the data object agent component and the activity service model component at the server-side: a column-name-based synchronization where each row of data uses column name and corresponding value for data interaction and synchronization; or a serial-number-based synchronization where each row of data uses letter, column number and corresponding value for data interaction and synchronization.

The user interface component includes any interface component to be displayed at the client-side, which corresponds to the user interface descriptive component defined in the service model through a denomination, and synchronizes with data of the data object agent component through an event drive response mechanism.

In the above system architecture, as illustrated in Fig. 1, the service model factory component and the activity service model component at the server side are further connected to the external resources such as a database, for the interaction of resource files or data.

The software operation platform as illustrated in Fig. 1 is the overall architecture of a service model-oriented software operation platform. The content of the service model is illustrated in Fig. 2, including relevant service model attribute descriptions and a service model component, wherein the service model component includes a data object, a user interface descriptive component, a service model activity and client-side resources.

In which, the service model attribute includes model code, hierarchy code, model name, initial user interface component name, attachment path, public identifier, activity identifier, life cycle, authentication identifier, sub-model identifier, version number, modification date, and modification log information. When the public identifier is true, it means that all users online share the activity service model component created according to the service model object, otherwise an activity service model component will be created for each user according to the scheduling. Preferably, the service model activity attribute further includes an authorized alias, so that the activity service model component automatically judges whether the login user has the right to require an execution of the service model activity, according to the authorized alias.

The data object is an abstraction of the service entity object and accessible through a denomination. The data object attribute of the service model includes data object name, whether being static, modified attribute, SQL attribute, default value, synchronized column name, multilist update dependency, paging and other column attribute, wherein the data column may be user-defined. 'Whether being static' means that the data of the activity data object is shared by all the invokers, and when it is true, the invocations of the activity data object instances created based on the data object point to the same instance. Assigning the synchronized column name means that the client-side data object agent component of the software operation platform may have a data structure different from that of the data object of the server-side service model.

The user interface descriptive component is the content description and the event script of the user interface component of the service model at the client-side architecture of the client-side presentation layer, and it is accessible through a denomination. In other words, the user interface descriptive component is a definition of the user interface component in the client-side system architecture of the software operation platform. Optionally, upon the request from the client-side, the activity service model component at the server-side generates a description text according to an attribution definition of the user interface component, then the client-side control engine in the client-side system architecture parses and creates a client-side interface component and performs a displaying. In which, the user interface component has many types, such as free table, 2D table, tree table, button group, window, component container, bifurcated container, tab page, menu, list component, user-definition, etc., and the corresponding user interface descriptive components are descriptions of the user interface components. The user interface descriptive components are one-by-one corresponding to the user interface components and also have many different types. The attribute includes the public attribute and the private attribute. The public attribute includes the denomination, name description, position and size of the user interface component and the script executed when the creation is completed. The private attribute varies with the type of the user interface component. Preferably, the embodiment may further add a user interface component, i.e., a button group interface component that includes one or more button interface components. The alias may be set and authorized by defining the operation mode, and different buttons may be displayed under different operation modes or authorizations, thereby simplifying the complex authorization management under the traditional mode. In this embodiment, preferably, a gridding method may be adopted to locate the user interface component and set its size. The gridding means logically dividing the user interface into a grid with multiple rows and columns each having a specified width and height, and the above components are arranged at the positions in the grid by specifying the defined different components.

The service model activity is an action defined in the service model and accessible through a denomination. In which, on one hand, the service model activity mainly includes the following three types of activities: the first type is a service model activity automatically performed during the initialization, when the service model control engine at the server-side of the software operation platform creates the activity service model component instance of the software operation platform; the second type is a service model activity automatically performed during the model unloading, when the service model control engine at the server-side of the software operation platform creates the activity service model component unloading of the software operation platform; the third type is a service model activity performed when the client-side requests an invocation or during other explicit invocation. On the other hand, each service model activity supports three convention methods (not excluding other user-defined methods) which are performed orderly when the service model activity is invoked: method 1, a before method performed before the activity service model component synchronizes and accepts the data operation transmitted from the client-side; method 2, a call method performed after the activity service model component synchronizes and accepts the data operation transmitted from the client-side; method 3, an after method performed after the activity service model component executes the service activity invocation, and when the session between the client-side and the server-side is ended.

The client-side resource is other resource or script to be requested by the client-side of the software operation platform, and it is accessible through a denomination.

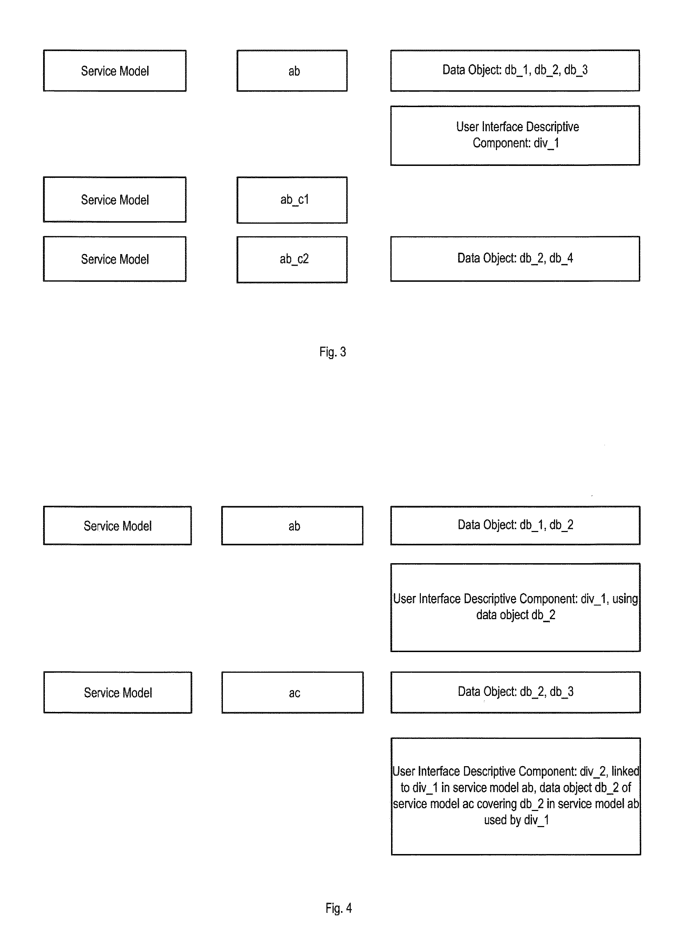

In this embodiment, preferably, the service model can make a service model inheritance by using the denomination rule or specifying the name of a parent service model. During the running process of the software operation platform, the content defined by the parent service model is accessible to a subservice model, wherein if the subservice model contains any data object, service model activity and client-side resource having the same denomination as the parent service model, the resource corresponding to the parent service model will be covered when the subservice model is accessed. Next, detailed descriptions are made with reference to Fig. 3.

As illustrated in Fig. 3, the denomination inheritance is made in a rule that the service model code character strings are included leftwards. Fig. 3 defines service models ab, ab_c1 and ab_c2, wherein service models ab_c1 and ab_c2 are deemed as inheriting service model ab. When subservice models ab_c1 and ab_c2 contain any data object, service model activity and client-side resource having the same denomination as parent service model ab, the resource corresponding to the parent service model will be covered. In Fig. 3, service model ab defines data object db_2 and component div_1, wherein div_1 uses db_2. Service model ab_c2 inherits ab, and it defines data object db_2. In that case, if div_1 is invoked using service model ab_c2, the db_2 of ab_c2 covers db_2 defined in ab, i.e., the data object actually used by div_1 is db_2 in ab_c2, rather than db_2 in ab. Being different from the object definition, the service model inheritance under the denomination inheritance mode only needs a denomination rather than any other identification.

When the service model inheritance is performed by specifying the parent service model name, the service model corresponding to the specified service model name becomes the parent model, and the service model inheritance rule is the same as the denomination inheritance mode.

Further, the service model may access the user interface component defined in other service model under the non-inheritance mode, by defining the link component, wherein when the service model and its parent model contain any data object having the same denomination as the linked service model, the data object in the linked service model having the same denomination will be covered. Next, detailed descriptions are made with reference to Fig. 4.

As illustrated in Fig. 4, the service model accesses the user interface component defined in other service model under the non-inheritance mode, by defining the link component. Under the link component mode, when the activity service model component at the server-side has loaded the data object having the same denomination as the link source component, the data object used by the link source component and defined by the service model where the link source component belongs is covered. In Fig. 4, service model ac defines a link component div_2 that is linked to div_1 of source component service model ab. When component div_2 is invoked in activity service model component ac loaded at the server-side, data object db_2 defined in service model ac covers data object db_2 defined in service model ab.

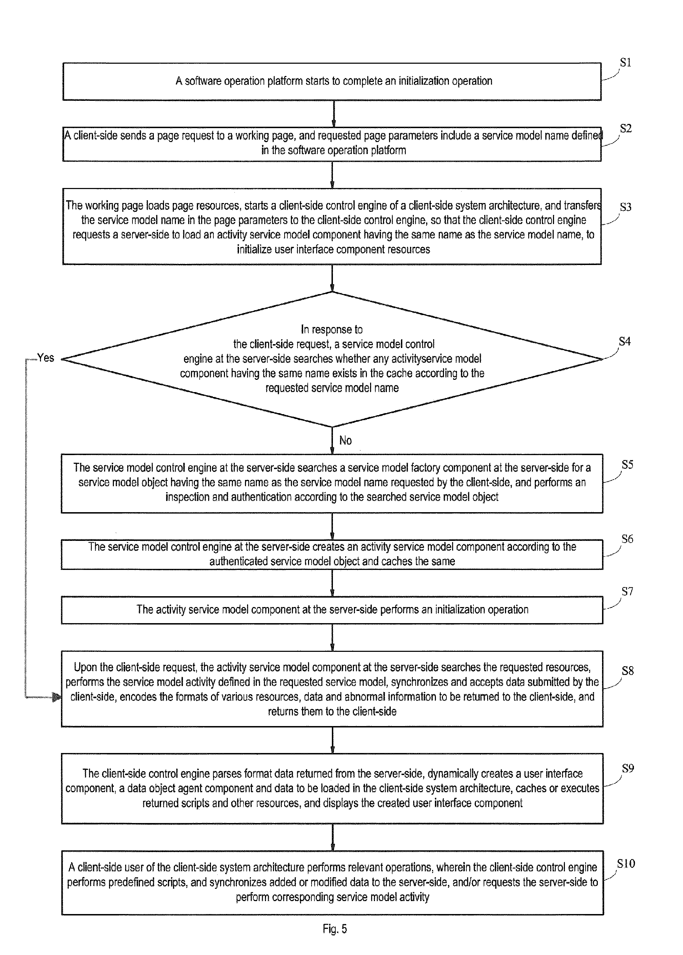

In correspondence to the service model-oriented software operation platform as illustrated in Fig. 1, Fig. 5 discloses an operation method thereof, including:
Step S1: the software operation platform starts to complete an initialization operation
Step S2: a client-side sends a page request to a working page, and requested page parameters include a service model name defined in the software operation platform.
Step S3: the working page loads page resources, starts a client-side control engine of a client-side system architecture, and transfers the service model name in the page parameters to the client-side control engine, so that the client-side control engine requests a server-side to load an activity service model component having the same name as the service model name, to initialize user interface component resources.
Step S4: in response to the client-side request, a service model control engine at the server-side searches whether any activity service model component having the same name exists in the cache according to the requested service model name, and if yes, turning to step S8, otherwise going to step S5.
Step S5: the service model control engine at the server-side searches a service model factory component at the server-side for a service model object having the same name as the service model name requested by the client-side, and performs an inspection and authentication according to the searched service model object.
   In which, in step S5, the service model control engine at the server-side searches a service model factory component at the server-side for a service model object having the same name as the service model name requested by the client-side, and if no service model object is existed, the service model factory component searches the software platform for resources defining the service model, and creates and manages a service model object according to searched resource data, the service model including a data object accessible through a denomination, a user interface descriptive component, a service model activity and client-side resources.
Step S6: the service model control engine at the server-side creates an activity service model component according to the authenticated service model object and caches the same. In which, as illustrated in Fig. 1, the activity service model component includes one or more service model instances, which contain an activity data object, a service model activity, an activity user descriptive component and client-side resources.
Step S7: the activity service model component at the server-side performs an initialization operation, i.e., an initialization service model activity defined in the service model. Preferably, each service model object uses a class loader defined by itself to perform a real-time compiling, and caches the compiled scripts in the service model object; and when the service model factory component at the server-side releases the service model object, the class loader is also released to ensure an instant update. Preferably, the activity service model component supports an automatic life cycle management, and there are two types as follows specifically for the activity service model component at the server-side:
   maintenance: from the start of the loading till the end of the whole session (unless explicit closing), or before the recreation of an activity service model component having the same name;
   exclusiveness: during the whole session process, only one activity service model component of such type can be maintained, and once another activity service model component of the same type is established, the another activity service model component of the exclusiveness type will be automatically released.
Step S8: upon the client-side request, the activity service model component at the server-side searches the requested resources, performs the service model activity defined in the requested service model, synchronizes and accepts data submitted by the client-side, encodes the formats of various resources, data and abnormal information to be returned to the client-side, and return them to the client-side.
Step S9: the client-side control engine parses format data returned from the server-side, dynamically creates a user interface component, a data object agent component and data to be loaded in the client-side system architecture, caches or executes returned scripts and other resources, and displays the created user interface component.
Step S10: a client-side user of the client-side system architecture performs relevant operation, wherein the client-side control engine performs predefined scripts, and synchronizes added or modified data to the server-side, and/or requests the server-side to perform corresponding service model activity ("and/or" means being optional, when the added or modified data is synchronized, the server-side may be requested to execute corresponding service model activity, but the synchronization of relevant data and the request of the execution of corresponding service model activity may also be carried out separately). Usually, the client-side requests the server-side to perform a service model denomination activity defined in the specified service model, then the server-side searches the resources of the service model denomination activity, performs the searched scripts of the service model activity, and returns relevant result information to the client-side. Next, the client-side control engine parses relevant data and performs relevant processing. When the processing is completed, the method turns to step S4 and enters a next interactive session, so circulations are made in that way.

The operation method as illustrated in Fig. 5 is based on the service model. During the execution of the operation method, the service model can make a service model inheritance by using the denomination rule or specifying the parent service model name, and the subservice model may access the content defined by the parent service model, wherein if the subservice model contains any data object, service model activity and client-side resource having the same denomination as the parent service model, the resource corresponding to the parent service model will be covered when the subservice model is accessed. Thus, on the basis that the resource of the parent service model is reusable to the subservice model, the coverage of the resource corresponding to the service model can prevent the subservice model and the parent service model from being inconsistent with each other, satisfy the individual need of the subservice model, and achieve the integration and encapsulation of the members of the service model.

Since the activity service model component can only access the service model object resource and the parent (including ancestor) service model object resource on which it is dependent, the service model itself has an encapsulation. In this embodiment, the service model may further access the user interface component defined in other service model under the non-inheritance mode, by defining the link component, wherein when the service model and its parent model contain any data object having the same denomination as the linked service model, the data object in the linked service model having the same denomination will be covered. Through the component linking, other service model resources under the non-inheritance mode can be accessed, thereby improving the reusability and extensibility of the service model resource. Under the component link mode, the coverage of the data object having the same denomination not only avoids the resource access confliction, but also enhances the extensibility of the service model and enables the service model to support the members. For example, we define a service model for workflow processing. The interface methods of the workflows are usually unified, but in order to support the workflows of different bill or file processing, the data object for realizing a flow definition rule or recording a flow processing shall be corresponding to different data sheets in the database. In that case, it only needs to define a data object having the same denomination in the service model that accesses the workflow service model, and no change is made to the content of the workflow service model. The way of coverage greatly improves the versatility and flexibility of the service model, and enables the service model to support the members.

In the traditional software development, the programmer spends much time in judging whether the login user has the right to perform a certain method or function, and many codes shall be written. In addition, the above method or function is usually mingled with specific methods or functions, and the hierarchies are not distinct, so it is difficult for development, modification, extension or maintenance. Thus, in the embodiment of the present invention, the activity service model component may automatically judge whether the login user has the right to require executing relevant service model activity, according to the authorized alias. The automatic judgment using the authorized alias can separate the function codes from the judgment of the user execution right. The programmer only needs to set an authorized alias the same as the alias of the specific right, without considering the execution right of the login user or writing any program code. Therefore, the implementation is simple, the hierarchies are distinct, and it is easy for development, extension and maintenance, thereby greatly improving the development efficiency.

Preferably, the operation method as illustrated in Fig. 5 may further include the following steps:
the row data of the data object agent component of the client-side system architecture corresponds to the row data of the activity data object in the activity service model component at the server-side through a unique row identifier which is dynamically generated, and serves as the identifying basis for row data synchronization;
wherein there are two modes for the row data content synchronization between the activity data objects in the data object agent component of the client-side system architecture and the activity service model component at the server-side:
   a column-name-based synchronization where each row of data uses column name and corresponding value for data interaction and synchronization; or
   a serial-number-based synchronization where each row of data uses letter, column number and corresponding value for data interaction and synchronization.

The advantages and disadvantages of the above two synchronization modes are described as follows through examples:

For example, the information of a student is to be modified or entered, and the student has field information StudentName, StudentCode, ClassName and BornDate.

When the client-side and the server-side perform data interactions with each other, the data code of the above row information varies under the two synchronization modes:
1. the column-name-based synchronization where each row of data uses column name and corresponding value for data interaction and synchronization:
   the code is <row _rowid="1" StudentName="Zhang San" StudentCode="0001" ClassName="101" BornDate="1980-01-01 "/>
2. the serial-number-based synchronization where each row of data uses letter, column number and corresponding value for data interaction and synchronization:
   the code is<row _rowid="1" c1="Zhang San" c2="0001" c3="101" c4="1980-01-01"/>

Since a column correspondence has been established between the data object agent component at the client-side and the activity data object at the server-side, it is obvious that the transferred data traffic can be reduced when the serial-number-based synchronization is employed. In addition, for example, column number 1 is obtained after separating column name c1, and it directly points to the position of the data column, thereby effectively shortening the positioning time of the data column, and improving the software operating efficiency, while when the first mode is employed, the column position shall be searched according to the column name, so the speed is much slower.

Under the traditional condition that the form is used to interact with the server, the information in the form shall be all downloaded or submitted, whether the content is modified or not. The number of interactions and the data volume are both large. The software operation platform and the operation method thereof disclosed by the present invention can reduce the number of network interactions and the transferred data traffic, which is at least reflected in following contents a to c:
a. under the platform, for the presentation interface of the client-side page, the client-side interface component is cached by the client-side control engine (unless explicitly removed) once being loaded by the client-side interface component through a component denomination. When the client-side interface component is requested again, it is loaded by the client-side control engine from the client-side cache, which greatly decreases the data volume of the requested interface resource. When the data in the interface component is to be changed, it only needs to update the data content of the data object agent component at the client-side, and the content of the corresponding client-side interface component will be updated through an event mechanism. The presentation layer (View) and the data layer (Model) are separated from each other, which meets the classical MVC structure ideas.
b. a row data interaction between the data object agent component at the client-side and the activity data object component at the server-side is performed through the serial-number-based synchronization, and the network traffic is far less than the traditional situation (usually reduced by more than 1/3).
c. the data object agent component at the client-side may record the modified column unit data. As a result, only the modified data rather than all the data shall be submitted to the server. In the above example, when the user modifies the content of the field StudentName, the transferred row data after the encoding is:
   <row _rowid="1" c1="Li Si"/>

The reduced data volume depends on the actual condition. Generally, the network data volume may be reduced by 10%-90%, and the whole data volume may be reduced by more than 1/2 of the traditional situation.

In this embodiment, preferably, the script codes of the service model activity support source code loading, wherein each service model object uses a class loader defined by itself to perform a real-time compiling, and caches the compiled scripts in the service model object; and when the service model factory component at the server-side releases the service model object, the class loader is also released to ensure an instant update.

In this embodiment, preferably, the service model factory component at the server-side generates a data object instance when creating the service model object, and generates an activity data object instance according to the data object instance when the activity service model component processes a client-side request, wherein the activity data object makes an interaction of cached activity data with the database or other external resources, so as to realize data processing and data persistence.

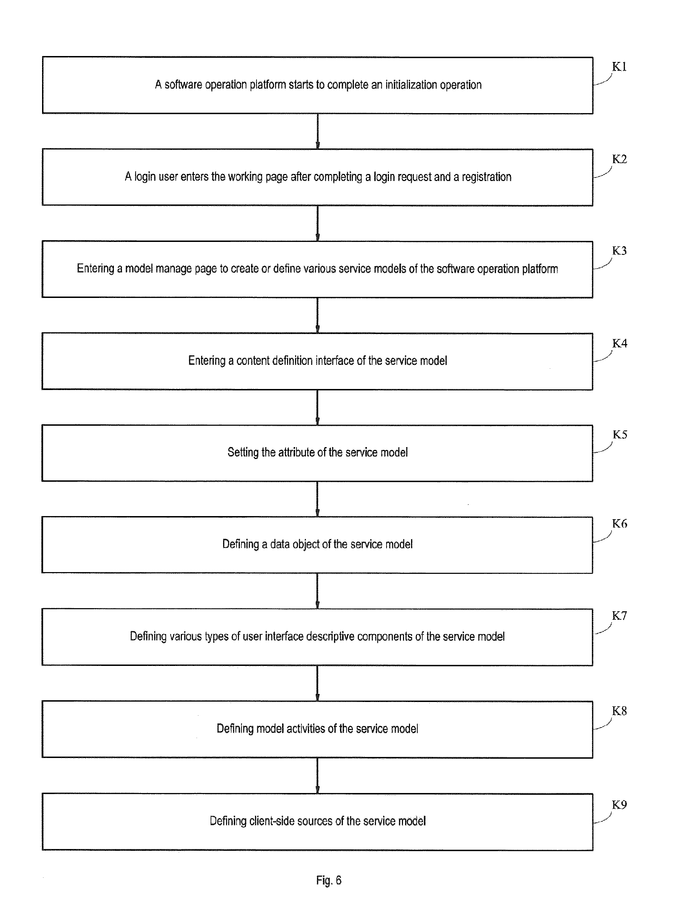

Based on the above software operation platform and the operation method thereof, a service model-oriented software development method can be realized through the following steps, as illustrated in Fig. 6:
Step K1: the software operation platform starts to complete an initialization operation
Step K2: a login user enters the working page after completing a login request and a registration.
Step K3: entering a model manage page to create or define various service models of the software operation platform.
Step K4: entering a content definition interface of the service model.
Step K5: setting the attribute of the service model.
Step K6: defining a data object of the service model.
Step K7: defining various types of user interface descriptive components of the service model
Step K8: defining model activities of the service model.
Step K9: defining client-side sources of the service model.

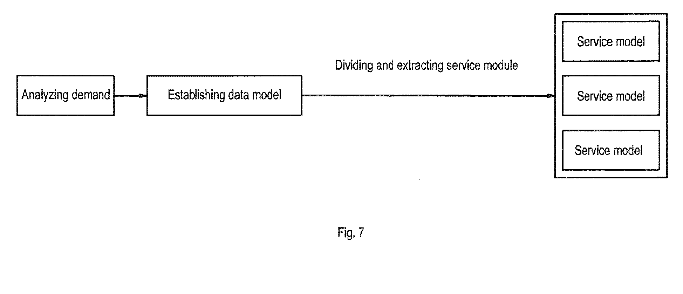

The above development method is very simple. The service model definition is closely related to the specific service requirement, while the technical requirement is low, thus the developers and implementers can concentrate on the services. As illustrated in Fig. 7, most works of the developers are focused on analyzing and establishing the data models upon demand, dividing and extracting the service modules, and defining the service models and the content thereof. It no longer needs to spend too much time in technology implementation. In the practical development, the development platform is also established based on the system architecture of the present invention.

In the present invention, the software system architecture in the software operation platform is a technical framework and implementation strategy, including operation mode and development method, while being independent from the web operation platform or a certain language, regardless of J2EE specification, .net or other service platforms.

In the service model-oriented software operation platform and the development method disclosed by the embodiments, usually there is only one homepage file requested by the client-side of the software operation platform according to the service model name (not excluding multiple page files), and the displayed user interface varies with component resource defined in the requested service model. The homepage file (also called as working page) can no longer use a form to interact with the platform server-side (not excluding the usage of form), instead, the client-side control engine and the server-side service model control engine of the software operation platform make a uniform management. The total code volume is greatly reduced as compared with the traditional situation, and the whole system is concise and clear. In addition, release or deployment is not required, which obviously shortens the software release cycle, and greatly reduces the software development cost and the implementation cost. Thus the maintenance is simple and the secondary development is very easy. Since the non-form manner may be employed, a good man machine interface can be provided to be accepted by the final user more easily. In the software operation platform, the usage of the data object shields the direct access to the database SQL by the client-side, so as to effectively prevent the SQL injection attack, thus the performance and the security are higher. As data transmission and synchronization are optimized, the network traffic is reduced largely, and it is more safe, stable, reliable and suitable to the development of large-scale enterprise applications.

Finally to be noted, the above embodiments are just used to describe the technical solutions of the present invention, rather than making limitations thereto. Although the present invention is detailedly described with reference to the above embodiments, a person skilled in the art shall appreciate that the technical solutions of the above embodiments can be modified, or a part of technical features thereof can be equivalent replaced, provided that the substance of corresponding technical solution does not deviate from the spirit and scope of the technical solutions of various embodiments of the present invention.

### Industrial Applicability

The service model-oriented software operation platform and the operation thereof in the present invention are mainly applied to the software system development, and they support member integration and customization. They are integrated solutions of platform architecture, user interface, data persistence, security, rights management, etc. Release or deployment is not required, and the code amount is greatly reduced as compared with the traditional situation. Thus they are simple, clear, safe, stable, reliable and easily learnable and extensible, with a high development efficiency, a low maintenance cost and a wide application range. Moreover, the software development only needs to create or define various service models of the software operation platform, which simplifies the software system development, and program release or deployment is not required. Further, the workload of code writing is largely reduced, which decreases the cost of development, implementation and maintenance, obviously shortens the software development cycle, and effectively reduces the number of network interactions and the transferred data traffic. Thus the present invention has a very high industrial applicability.

## Claims

1. A service model-oriented software operation platform, comprising a server-side system architecture and a client-side system architecture;
the server-side system architecture comprises:
a service model factory component configured to search resources of a defined service model, and create and manage a service model object according to searched resource data, the service model comprising a data object accessible through a denomination, a user interface descriptive component, a service model activity and client-side resources;
a service model control engine configured to provide services of session security authentication and service model access authentication, and load or release an activity service model component;
an activity service model component configured to process an access request from a client-side, and provide a program context interface and an external access interface; upon the client-side request, synchronize and accept data transferred from the client-side, inquire and create various requested resources, respond to and execute the requested service model activity, and according to the execution condition of the service model activity, return the requested resources, data or abnormal information; load a service model instance according to the service model object defined by the service model factory component, parse the relation between the service model definition, the service model inheritance and the component link, schedule various resources defined in the service model, create and manage an activity data object instance and interaction data according to the data object component in the service model object, and perform the service model activity defined in the service model to complete a client-side scheduling or other external scheduling;
the client-side system architecture comprises:
a client-side control engine configured to process a resource request from the client-side, instruct a scheduling, transmit data or other resources to be synchronized with the server, request to perform a service model activity, data encoding and decoding, and communications, respond to, parse, load and execute data, codes or other resources returned from the server-side, and provide a code operation environment for a client-side program;
a data object agent component configured to serve as a source of data displayed by the user interface component, which corresponds to an activity data object instance having the same denomination in the activity service model component and contains all or partial data of the activity data object instance;
a user interface component, comprising any interface component to be displayed at the client-side, which corresponds to the user interface descriptive component defined in the service model through a denomination, and synchronizes with data of the data object agent component through an event drive response mechanism.

2. An operation method of the software operation platform according to claim 1, comprising:
Step S1: the software operation platform starts to complete an initialization operation
Step S2: a client-side sends a page request to a working page, and requested page parameters comprise a service model name defined in the software operation platform;
Step S3: the working page loads page resources, starts a client-side control engine of a client-side system architecture, and transfers the service model name in the page parameters to the client-side control engine, so that the client-side control engine requests a server-side to load an activity service model component having the same name as the service model name, to initialize user interface component resources;
Step S4: in response to the client-side request, a service model control engine at the server-side searches whether any activity service model component having the same name exists in the cache according to the requested service model name, and if yes, turning to step S8, otherwise going to step S5;
Step S5: the service model control engine at the server-side searches a service model factory component at the server-side for a service model object having the same name as the service model name requested by the client-side, and performs an inspection and authentication according to the searched service model object;
Step S6: the service model control engine at the server-side creates an activity service model component according to the authenticated service model object and caches the same;
Step S7: the activity service model component at the server-side performs an initialization operation;
Step S8: upon the client-side request, the activity service model component at the server-side searches the requested resources, performs the service model activity defined in the requested service model, synchronizes and accepts data submitted by the client-side, encodes the formats of various resources, data and abnormal information to be returned to the client-side, and returns them to the client-side;
Step S9: the client-side control engine parses format data returned from the server-side, dynamically creates a user interface component, a data object agent component and data to be loaded in the client-side system architecture, caches or executes returned scripts and other resources, and displays the created user interface component; and
Step S10: a client-side user of the client-side system architecture performs relevant operations, wherein the client-side control engine performs predefined scripts, and synchronizes added or modified data to the server-side, and/or requests the server-side to perform corresponding service model activity.

3. The operation method according to claim 2, comprising:
in step S5, the service model control engine at the server-side searches the service model factory component at the server-side for a service model object having the same name as the service model name requested by the client-side, and if no service model object is existed, the service model factory component searches the software platform for resource information defining the service model, and creates and manages a service model object according to the searched resource information, the service model comprising a data object accessible through a denomination, a user interface descriptive component, a service model activity and client-side resources.

4. The operation method according to claim 3, wherein the service model makes a service model inheritance by using a denomination rule or specifying the name of a parent service model, the content defined by the parent service model being accessible to a subservice model, wherein if the subservice model contains any data object, service model activity and client-side resource having the same denomination as the parent service model, the resource corresponding to the parent service model is covered when the subservice model is accessed.

5. The operation method according to claim 4, wherein the service model accesses the user interface component defined in other service model under a non-inheritance mode, by defining a link component, wherein when the service model and its parent model contain any data object having the same denomination as a linked service model, an data object in the linked service model having the same denomination is covered.

6. The operation method according to claim 2, 3, 4 or 5, wherein the service model activity attribute contains an authorized alias, the operation method further comprising:
the activity service model component automatically judges whether a login user has the right to require an execution of the service model activity, according to the authorized alias.

7. The operation method according to claim 2, 3, 4 or 5, wherein row data of the data object agent component of the client-side system architecture corresponds to row data of the activity data object in the activity service model component at the server-side through a unique row identifier which is dynamically generated, and serves as the identifying basis for row data synchronization;
wherein there are two modes for row data content synchronization between the activity data objects in the data object agent component of the client-side system architecture and the activity service model component at the server-side:
a column-name-based synchronization where each row of data uses column name and corresponding value for data interaction and synchronization; or
a serial-number-based synchronization where each row of data uses letter, column number and corresponding value for data interaction and synchronization.

8. The operation method according to claim 2, 3, 4 or 5, wherein the script codes of the service model activity support source code loading, the operation method further comprising:
each service model object uses a class loader defined by itself to perform a real-time compiling, and caches the compiled scripts in the service model object; and
when the service model factory component at the server-side releases the service model object, the class loader is also released to ensure an instant update.

9. The operation method according to claim 2, 3, 4 or 5, wherein the service model factory component at the server-side generates a data object instance when creating the service model object, and generates an activity data object instance according to the data object instance when the activity service model component processes a client-side request, wherein the activity data object makes an interaction of cached activity data with a database or other external resources.

10. The operation method according to claim 2, 3, 4 or 5, wherein a service model-oriented software development method comprising:
Step K1: a software operation platform starts to complete an initialization operation;
Step K2: a login user enters the working page after completing a login request and a registration;
Step K3: entering a service model manage page to create or define various service models of the software operation platform;
Step K4: entering a content definition interface of the service model;
Step K5: setting the attribute of the service model;
Step K6: defining a data object of the service model;
Step K7: defining various types of user interface descriptive components of the service model;
Step K8: defining model activities of the service model;
Step K9: defining client-side sources of the service model.
